# EUROPEAN PATENT APPLICATION

(11) **EP 3 182 282 A1**
(43) Date of publication of application: **21.06.2017**
(21) Application number: 15200166.5
(22) Date of filing: 15.12.2015
(51) Int. Cl.: G06F 9/455, G06F 13/10

(54) **METHOD FOR OPERATING A SYSTEM IN A CONTROL UNIT AND SYSTEM**

(71) Applicant: OpenSynergy GmbH, 10245 Berlin (DE)
(72) Inventor: SÖDING FREIHERR VON BLOMBERG, Axel, 10437 Berlin (DE)
(74) Representative: Lavoix

(57) **Abstract**

The present invention relates to a system (20), comprising at least one processor (3), and at least one memory (5), and at least one hardware interface (7) adapted to be connected to at least one peripheral device (9), the system further comprising: a virtualization layer (28) adapted to run on the at least one processor; a plurality of partitions adapted to run on the at least one virtualization layer, the virtualization layer being adapted to assign processor time and memory space to the plurality of partitions, the plurality of partitions comprising a first partition (22) and a plurality of second partitions (24), wherein the first partition includes a device driver (34) having access to the at least one hardware interface (7) and a sharing logic (36) adapted to control and provide access for the plurality of second partitions (24) to the device driver (7), wherein each second partition includes a virtual device driver for the at least one hardware interface (7); a plurality of inter partition communication link provided by the virtualization layer (28) for connecting the first partition (22) to each second partition (24, 26); and a sharing infrastructure (58) providing a connection between the sharing logic (36) and the virtual device drivers (38, 40) via the inter partition communication links.

## Description

The present invention concerns a system comprising at least one processor, and at least one memory, and a network communication device, the system further comprising: a virtualization layer running on the at least one processor, a plurality of partitions running on the at least one virtualization layer, the virtualization layer being adapted to assign processor time and memory space to the plurality of partitions.

Further, the present invention relates to a method for operating a system comprising at least one processor, and at least one memory, and a network communication device, the method comprising running a virtualization layer on the at least one processor and running a plurality of guest systems on the at least one virtualization layer.

In addition, the present invention relates to a computer program product comprising commands for executing such a method.

WO 2010/042374 A2 discloses a system comprising a privileged partition having direct access the disk and a second, non-privileged partition that may request access to the disk. The non-privileged partition communicates via a VM Bus to the privileged partition to access the disk.

Further, there exists a XEN hyper visor that allows multiple operating system instances to run concurrently on a single physical machine. It includes a privileged virtual machine which owns specific hardware. The other virtual machines interact with the privileged virtual machine to access the hardware.

Object of the invention is to simplify a system comprising a hypervisor and a plurality of partitions.

In light of the above, a system is provided, comprising at least one processor, and at least one memory, and at least one hardware interface adapted to be connected to at least one peripheral device, the system further comprising:
a virtualization layer adapted to run on the at least one processor;
a plurality of partitions adapted to run on the at least one virtualization layer, the virtualization layer being adapted to assign processor time and memory space to the plurality of partitions, the plurality of partitions comprising a first partition and a plurality of second partitions, wherein the first partition includes a device driver having access to the at least one hardware interface and a sharing logic adapted to control and provide access for the plurality of second partitions to the device driver, wherein each second partition includes a virtual device driver for the at least one hardware interface;
a plurality of inter partition communication link provided by the virtualization layer for connecting the first partition to each second partition; and
a sharing infrastructure providing a connection between the sharing logic and the virtual device drivers via the inter partition communication links, wherein the sharing infrastructure comprises a framework for managing the connection on the inter partition communication links, wherein the framework includes a framework server portion, a first framework client portion provided in the first second partition and the second framework client portion provided in the second second partition, wherein each framework client portion is connected to the framework server portion via the at least one inter partition communication link, wherein framework server portion is adapted to synchronize received link messages from the first and second framework client portion.

According to particular embodiments, the system may have the following features, which may be combined in any technical feasible combination:
- the interfaces and/or commands provided by the sharing infrastructure is independent from the device driver, the at least one hardware interface, the peripheral device and/or the virtual device driver wherein, in particular, the sharing infrastructure comprises a server application program interface for the sharing logic, a client application program interface for each virtual device driver, and a framework for managing the connection on the inter partition communication links between the client application program interface and the server application program interface;
- at the framework server portion, a respective port is assigned to each inter partition communication link, wherein the framework server portion is adapted to read only a single message at a time from the plurality of ports;
- the framework server portion is adapted to provide a first list, wherein the first list lists jobs to be performed, wherein the framework server portion is adapted to write only a single job at a time into the list upon reception of a plurality of link messages at the ports, wherein one or more jobs include at least an information that a message was received at a specific port, wherein framework server portion is adapted to process the jobs in the first list according to their order, in particular to read the received link message from the respective port;
- after being read, the framework server portion is adapted to remove the respective job from the first list;
- upon reception of a link messages at a ports, a signal is generated, for example an interrupt signal assigned to one or more ports, wherein the framework server portion is adapted to, upon reception of the signal to write the respective job into the first list;
- the framework server portion is adapted to provide a second lists including available jobs, wherein the number and/or type of possible jobs is/are predefined;
- each inter partition communication link is adapted to transport a one or more channels to exchange one or more channel messages between the framework server portion and the respective framework client portions;
- in case of that a plurality of channels are provided on one inter partition communication link, the plurality of channels are multiplexed;
- the framework server portion is adapted to demultiplex the channels from the communication link, in particular to read the channel messages from the link messages;
- the framework server portion is adapted to communicate via the same channel with at least two framework client portions provided on different partitions; and/or
- the sharing logic is adapted to synchronize the access to the at least one hardware interface, to provide access to the at least one hardware interface in dependence of a priority of a partition and/or a data, to provide exclusive access to at least one specific peripheral device for an application on a predefined second partition, to map physical addresses to respective second partitions and/or to provide access control to a memory or a storage device.

According to another aspect, a method is provided for operating a system in a control unit comprising at least one processor, and at least one memory, and at least one hardware interface adapted to be connected to at least one peripheral device, the method comprising:
running a virtualization layer on the at least one processor,
running a plurality of partitions on the at least one virtualization layer, the virtualization layer assigning processor time and memory space to the plurality of partitions, the plurality of partitions comprising a first partition and a plurality of second partitions, wherein the first partition includes a device driver having access to the at least one hardware interface and a sharing logic, and each second partitions includes a virtual device driver for the at least one hardware interface,
controlling and providing access, by the sharing logic, to the device driver for the plurality of second partitions;
connecting, by the virtualization layer, the first partition to each second partition via a plurality of inter partition communication links;
connecting, via the inter partition communication links, between the sharing logic and the virtual device drivers;
managing, by a framework, the connection on the inter partition communication links, wherein the framework includes a framework server portion, a first framework client portion provided in the first second partition and the second framework client portion provided in the second second partition, wherein each framework client portion is connected to the framework server portion via the at least one inter partition communication link; and
synchronizing received link messages from the first and second framework client portion by the framework server portion.

In embodiments, the methods implement different method steps of embodiments disclosed herein, in particular of a system according to embodiments disclosed herein.

According to a further aspect, a computer program product is provided comprising commands for executing the method according an embodiment disclosed herein, when loaded and executed on a processor. According to an embodiment a computer program product may be a physical software product, for example a hard disc, a solid state disc, a CD-ROM, a DVD, comprising the program.

According to other aspects, the present invention relates to non-volatile memory, for example a hard disc, a solid state disc, a CD-ROM, a DVD, including a program containing commands for executing the method according an embodiment disclosed herein, when loaded and executed on a processor.

Further advantages, features, aspects and details are evident from the dependent claims, the description and the drawings.

So that the manner in which the above recited features of the present invention can be understood in detail, a more particular description of the invention, briefly summarized above, may be read by reference to embodiments. The accompanying drawings relate to embodiments of the invention and are described in the following:
Fig. 1 shows schematically the hardware of an electronic control unit (ECU);
Fig. 2 shows schematically a system according to an embodiment of the invention;
Fig. 3 shows schematically the system of figure 2 with more details;
Fig. 4 shows schematically the system of figure 3 with more details according to a further embodiment; and
Fig. 5 shows schematically the links between different partitions in more detail;
Fig. 6 shows a flow chart upon reception of a message;
Fig. 7 shows a first list;
Fig. 8 shows a second list;
Fig. 9 shows an embodiment of a flow chart of a synchronization of received message according to an embodiment, and
Fig. 10 shows a further flow chart of events upon reception of a message according to an embodiment.

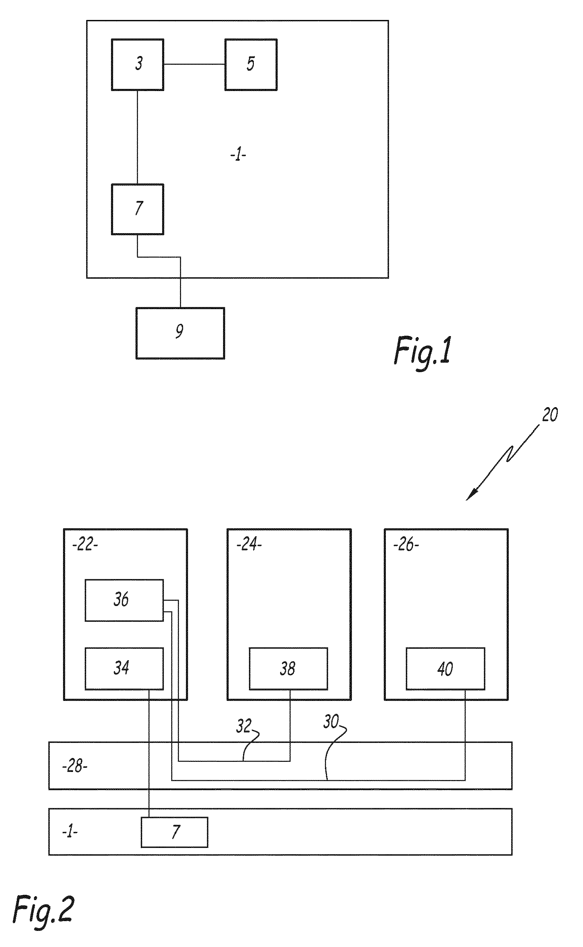

Figure 1 shows schematically an electronic control unit (ECU) 1, in particular for an automotive vehicle. The ECU 1 might be also called control unit in the present patent application. For example, the ECU 1 is realized as a system on chip (SoC). According to an embodiment, an ECU comprises one or more processors 3 connected to one or more memories 5. Further, the ECU 1 may comprise at least one hardware interface 7 for connecting to one or more peripheral devices 9. In other embodiments, the one or more peripheral device is integrated in the ECU, in particular on the SoC.

For example, the peripheral devices may a bus systems, for example one or more physical network communication devices for controller area network (CAN) busses, Ethernet connection and/or FlexRay busses and the like. CAN and FlexRay bus systems are dedicated for use in automotive vehicles. For automotive field busses the CAN (Controller area network) protocol is widely used. The CAN Protocol specifies the transport of CAN messages over a CAN bus. The CAN is standardized according to ISO 11898.

According to other embodiments, the hardware interface 7 may be graphic processing unit, an audio device or the like. Also other peripheral devices, like storage devices may be connected to the hardware interface 7.

Usually, an automotive vehicle comprises a plurality of electronic control units (ECU), which may be assigned to different units of the vehicle, for example the steering wheel, the brakes, the windows, the motor etc. For example, the ECU 1 may be connected to some sensors or drivers via the hardware interface 7, for example to drive the window, or to sense the angulation of the steering wheel, the level of oil or water in the motor. Some ECUs are providing information for the user of the vehicle, for example information about the status of the vehicle, for example the angulation of the steering wheel, temperature information, the use the status of the vehicle to display enhanced information, and the like.

According to an embodiment, the ECU 1 is provided as an embedded system in a vehicle.

In an embodiment, the hardware interface 7 is connected to two or more peripheral devices 9.

Figure 2 shows the architecture of a system 20 according to an embodiment of the invention. The system 20 is implemented on the ECU 1. The system 20 comprises a plurality of partitions 22, 24, 26. For example guest systems or guest operating systems are able to run in each partition 22, 24, 26. The partitions 22, 24, 26 are running via a virtualization layer 28, for example a microkernel or a hypervisor, on the microprocessor 3 of the ECU 1. In other words, the virtualization layer 28 enables several partitions and guest systems 22, 24, 26 to run on the microprocessor 3. The virtualization layer 28 is adapted to assign processor time and memory space to the plurality of partitions 22, 24, 26. According to an embodiment on each partition a Linux operating system is running.

The partitions are separated and isolated by the virtualization layer 28. According to an embodiment a partition is an isolated runtime environment provided by the virtualization layer 28.

One example of a virtualization layer 28 is a hypervisor between the hardware, for example a system on chip (SoC), and partitions 22, 24, 26. The hypervisor runs directly on the hardware, in particular the processor 3, to control the hardware and manages the partitions and the communication between the partitions. The hypervisor provides and defines a simulated hardware for the installed guest systems. Further, the hypervisor assigns the hardware resources to the respective guest systems and/or partitions and mechanisms for communication between different guest systems and/or partitions (inter-partition-communication (IPC)).

Another example of a virtualization layer 28 is a microkernel operating system, which is used as a virtualization layer between the hardware and partitions 22, 24, 26. The microkernel runs directly on the hardware. A microkernel is a minimal operating system construct, which makes mechanisms available in order to implement operating system services. This comprises substantially: the management of the address range or space, the provision and management of mechanisms for separating program sections and their thread management and scheduling, and mechanisms for communication between different guest systems and/or partitions (inter-partition-communication (IPC)).

As already discussed here-above, the virtualization layer 28 is adapted to assign the hardware resources to the respective partitions 22, 24, 26 and to provide inter partition communication (IPC) links 30, 32 between the different partitions 22, 24, 26. Further, the virtualization layer 28 is adapted to provide or restrict address ranges of the hardware, for example the one or more hardware interfaces 7, to specific partitions 22, 24, 26.

In an embodiment, the virtualization layer 28 may enable direct and/or exclusive access for a specific partition, here the first partition 22, to a hardware interface 7 by enabling only the first partition 22 to access the hardware address range or the hardware register set of the network communication device 7, in particular without translation of the hardware address range by the virtualization layer 28. In this case, the physical and virtual addresses are mapped one-by-one. In other embodiments the virtual addresses to access the hardware interface 7 are different from the physical addresses. According to an embodiment, the virtualization layer ensures that the hardware interface 7 is only accessible from the first partition 22, for example by exclusively mapping the respective hardware address range into the virtual address range of the first partition 22. In other words, only the first partition 22 owns a mapping to the hardware address range of the hardware interface 7, all other partitions have no mapping to these hardware address range of the network communication device 7.

According to embodiments, the virtualization layer makes an exclusive assignment of the at least one hardware interface 7 to the first partition 22.

According to embodiments disclosed herein, the first partition 22 includes a device driver 34 and sharing logic 36. According to an embodiment, the sharing logic 36 has exclusive access to the device driver 34.

Each of the second partitions 24, 26 include a virtual device driver 38, 40 for the hardware interface.

According to an embodiment, the sharing logic 36 is adapted to synchronize the access to the at least one hardware interface 7. For example, the sharing logic 36 is adapted to allow only one of the virtual device drivers to access the at least one hardware interface 7 and/or the at least one peripheral device 9.

According to another embodiment, which may be combined with other embodiments enclosed herewith, the sharing logic 36 is adapted to implement a device specific sharing semantic. For example, in such case that the at least one hardware interface 7 may only be accessed by the virtual device driver providing or receiving data with a specific priority.

For example, in another embodiment, the hardware interface 7 is connected to at least two peripheral devices 9. In such a case, the sharing logic 36 is adapted to address the respective peripheral devices 9, i.e. one or more applications in the first second partition may access via a virtual device driver 38 a first peripheral device and one or more applications in the second second partition may access via a virtual device driver 40 a second peripheral device.

In other embodiments, the sharing logic may only allow one or more applications of a specific second partition to access a specific peripheral device (access control).

In another embodiment, in case the peripheral device is a memory, for example a mass storage device, the sharing logic is adapted to map physical memory partitions or addresses to specific second partitions 24, 26. For example, each second partition 24, 26 has its file system in assigned partition.

According to another embodiment, a partition may comprise a plurality of sharing logics. For example two sharing logics may be interconnected, i.e. the first sharing logic is adapted to share the access to at least one hardware interface 7 between a first second partition and the second sharing logic and the second sharing logic is adapted to share access to the first sharing logic between a second second partition and a third second partition.

The second partitions may be also called client partitions or may be also client virtual machines. The first partition 22 may be also denominated server virtual machine.

According to an embodiment, all the partitions are used with the same operating system, for example Linux.

The virtual device drivers 38, 40 implement for example original device driver application programming interfaces (API) provided by the operating system driver architecture and/or the producer of the hardware interface 7.

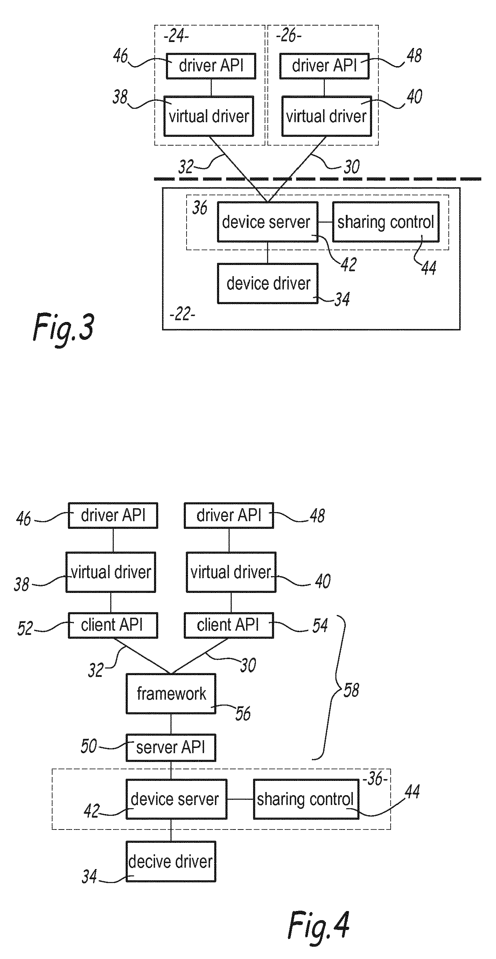

Figure 3 shows in more detail some components of the system 20. The sharing logic 36 includes a device server 42, to which the virtual device drivers 38, 40 of the second partitions 24, 26 are connected. The device server 42 solves, for example, concurrent access conflicts and implements a sharing semantic. The device server 42 has, in an embodiment, exclusive access to the device driver 34 to perform the actual shared device access.

Further, the sharing logic 36 implements a sharing control 44. The sharing control 44 is adapted to perform control of the behavior of the device server 42, which performs the runtime control of the sharing logic according to the commands of the sharing control 44. For example, the sharing control 44 may adapt the rules for sharing the one or more device drivers 34, the one or more hardware interfaces 7 and/or the one or more peripheral devices 9. In an embodiment the sharing control 44 is adapting the address range to be accessed by the first and second virtual device drivers 38, 40. In other embodiments, the sharing control 44 may adapt the priority of the first and second virtual device drivers 38, 40. For example, the sharing control 44 runs in a trusted code. In another embodiment, the sharing control 44 fully determines the sharing logic semantics, for example the sharing control 44, in case that the device drivers 38, 40 are virtual display drivers, determines the display regions and stacking order of a shared display controlled by the device driver 34 for each virtual display controlled by the virtual display drivers 38, 40.

Each of the virtual device drivers 38, 40 is provided with a device driver application program interface (API) 46, 48. The device driver API is adapted to provide further applications the access to the virtual device drivers 38, 40 with a defined set of commands. In an embodiment, the definition for the device driver API 46, 48 is taken from the operating system driver architecture, to enable seamless integration. For example, the device driver API 46, 48 definition is taken from the respective Linux device driver API, if the guest operating system of the client virtual machine 24, 26 is based on Linux.

Figure 4 shows further details of the system 20, in particular how the virtual device drivers 38, 40 are connected to the device server 42. The same features are designed with the same reference signs as in the previous drawings.

The device server 42 is provided with a server application program interface (API) 50. The device server API 50 is a predefined set of commands, which may be used by the device server 42. According to an embodiment, the predefined set of commands of the device server API 50 is independent, in particular of the type and implementation, of the device driver 34, the virtual device drivers 38, 40, the hardware interface 7 and/or the device server 42.

An application program interface provides routines, protocols and tools for building software application and describes a software component in terms of operations, inputs, outputs and underlying types. For example, for the usage of an API the concrete underlying implementation is not of interest.

In a similar way, each virtual driver is provided with a client API 52, 54. Each client API provides a predefined set of commands to the respective virtual device driver 38, 40. According to an embodiment, which may be combined with other embodiments disclosed herein, the predefined set of commands of the client API 52, 54 is independent of the device driver 34, the virtual device drivers 38, 40, the hardware interface 7 and/or the device server 42, in particular of the type and implementation thereof.

Further, Figure 4 shows a framework 56, which provides the connections between the client APIs 52, 54 and the server API 50, for example via the inter partition communication links 30, 32.

Also the framework 56 is independent of the device driver 34, the virtual device drivers 38, 40, the hardware interface 7 and the device server 42, in particular independent of the type and implementation thereof.

Independent of the device driver 34, the hardware interface 7 and/or the device server 42 means that the independently of the sharing semantic programmed in the device server and independently of the type of the at least one hardware interface and/or the at least one peripheral device 9 the client APIs 52, 54, the framework 56 and the device server API 50 remain unchanged.

In other words, the client APIs 52, 54, the framework 56 and the device server API 50 form a sharing infrastructure 58, which is independent of the actual hardware interface 7 and/or peripheral device 9. The sharing infrastructure 58 has APIs 50, 52, 54 being exposed to device specific components. Thus, the virtual device drivers 38, 40 use the client API 52, 54 to communicate with the device server 42, while the device server 42 uses the device server API 50 to communicate with the virtual device drivers 38, 40.

The system avoids the development of drivers in the context of the virtualization layer, which is rather expensive. Rather usual drivers for usual operating systems like Linux may be used to implement the system.

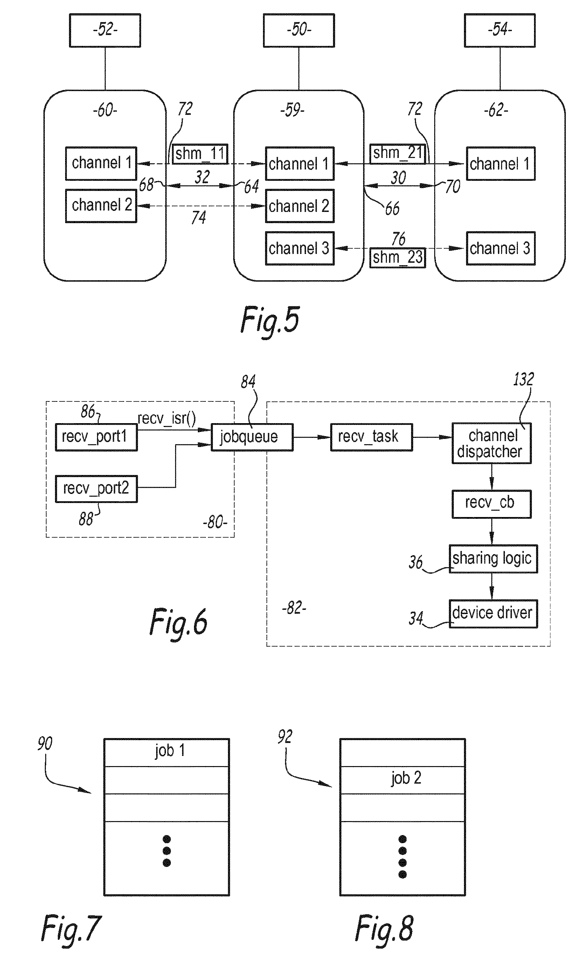

Figure 5 shows in more detail the framework 56, in particular a framework server portion 59, a first framework client portion 60 and a second framework client portion 62.

The framework server portion 59 provides functions for the device server API 50, whereas the first and second framework client portions 60, 62 provide functions for the client APIs 52, 54.

Figure 5 shows also the inter partition communication (IPC) links 30, 32 provided by the virtualization layer 28. According to embodiments the inter partition communication links 30, 32 provide a lossless message communication. For example, they are implicitly queued. Further, they are typically bi-directional and full-duplex.

The communication endpoints of the IPC links 30, 32 are called port, where input and output ports can be distinguished. For example, in Figure 5, the framework server portion 59 includes a first port 64 and a second port 66. The framework server portion 59 may also include more or less ports, for example if more partitions are provided in the system 20, which needs access to the hardware interface.

Further, the first and second framework client portions 60, 62 also include respectively one port 68, 70.

In Figure 5 the input and output ports are not distinguished. In other words, each port 64, 66 include respectively an input and an output port.

According to an embodiment, the framework server portion 59 is adapted to identify the connected partition or virtual machine by identifying the respective port.

The messages exchanged between the framework server portion 59 and the first and second framework client portions 60, 62 on the IPC links may have an arbitrary size up to a predefined maximum size.

Further, as it can be seen in Figure 5, a first, a second and a third channel 72, 74, 76 are provided to establish a logical connection between related channel objects located on the server and on the clients. In each portion 59, 60, 62 instances of a channel type are provided, shown as channel 'x' in each portion 59, 60, 62, where 'x' is 1, 2 or 3, which are also called channel objects. The channel objects are only visible in the partition where they are defined and can be identified by their address and carry the channel identifier 'x', where 'x' is in Figure 5 1, 2 or 3. The logical interconnection 72, 74, 76 of two channel objects is also carrying the same channel identifier. In other words the first, second and third channel or logical interconnections 72, 74, 76 located in different partitions is performed using the IPC links 30, 32 and transmitting the channel identifier along with the message. In other words, the logical interconnection 72, 74, 76 of multiple channel objects pairs is multiplexed over the link.

According to embodiments, more or less channels 72, 74, 76 may be provided. For example each IPC link may multiplex more than two channels.

In Figure 5, the first and second channel 72, 74 is multiplexed over the IPC link 32 and the first and third channel 72, 76 are multiplexed over the IPC link 30.

On each channel, channel messages are exchanged. For example, the channel messages may be limited to a specific size, for example 256 bytes.

Further, each channel may have on each link a shared memory, here designated as shm_11 for the first channel 72 on the IPC link 32, shm_21 for the first channel 72 on the IPC link 30 and shm_23 for the third channel 72 on the IPC link 30. The second channel 74 does not have shared memory. In other embodiments only specific channels may have a shared memory. The shared memory is only accessible for the partitions having access to the respective link 30, 32. In other words shared memory shm_21 is not accessible for the second framework client portions 60.

The shared memories are predefined and managed by the virtualization layer 28. The shared memories are provided to communicate larger amount of data, which exceeds the maximal size of a channel message.

According to an embodiment, the channels 72, 74, 76 enable a communication between channel objects and have the following properties: They are lossless, bi-directional and full-duplex, as they inherit the IPC link properties.

They enable a point-to-point connection between exactly two objects, so that there is no ambiguity. In case that a shared memory is assigned to a channel, the shared memory object is known a priori to both channel objects by configuration. For example data in shared memory are addressed using offsets relative to the shared memory start address. For example the shared memory shm_11 may have different virtual addresses to be used by the framework server portion 59 and the framework client portion 60 due to different address mappings To identify a particular data in shared memory, the offset to that data relative to the start address of the shared memory is exchanged between the framework server portion 59 and the framework client portion 60. The framework server portion 59 addresses this particular data by adding the data offset to the virtual address of the shared memory, mapped to the framework server portion. The framework client portion 60 addresses the same data by adding the same offset to the virtual address of the shared memory, mapped to the framework client portion.

According to some embodiments, the access between the framework server portion 59 and the respective framework client portions 60, 62 is synchronized using a token which is passed via channel message communication. For example, to transfer data from a framework client portions 60, 62 to the framework server portion 59, the client is only allowed to write to the respective shared memory shm_11, sh_21, shm_23 if it owns the token. The framework server portion 59 only relies on data being valid and consistent for reading, as long as it owns that token that has passed to him. For transferring data from the framework server portion 59 to one of the framework client portions 60, 62 the same mechanism applies vice versa.

As it can be seen form Figure 5, the same channel, here the first channel 72, is provided on two different IPC links 30, 32.

The channel objects within a portion or partition 59, 60, 62 are not synchronized with respect to each other by an operating system measure, for example due to a multi-core processor.

To avoid unwanted interference on the link caused by multiplexing channel communication, message sending needs to be synchronized using a mutual exclusion device that guards the message send function of an IPC link 30, 32. For example, when channel 1 on framework client portions 62 wants to send a message while channel 3 is sending, the mutual exclusion device suspends execution of channel 1 until the transfer of channel 3 has been completed.

In addition to the synchronization needs on each port 64, 66, 68, 70 to handle multiplexing of channels, the reception of link messages arriving at different ports 64, 66 on the framework server portion 59 need to be synchronized.

Figure 6 shows in more detail a flow chart regarding the synchronization of two link messages. Each input port 64, 66 of the links 30, 32 is associated with a receive-interrupt being triggered on a received message. According to an embodiment, the framework server portion 59 is connected to multiple IPC links 30, 32, which are in general operating asynchronously with respect to each other. For example, on a multi-core architecture interrupts may be triggered on different cores without mutual exclusion. Thus, link messages may arrive nearly simultaneously at the framework server portion 59 at the plurality of ports, for example the first port 64 and the second port 66.

Figure 6 shows on the left side 80 the events in an interrupt context. On the right side events and tasks are shown in the task context. In the interrupt context 80 race conditions may exist.

A race condition is a behavior of system where the output is dependent on the sequence or timing of other uncontrollable events. For example, an error might be produced, when the receiving interrupts or link messages are not treated in a specific sequence.

Figure 6 shows further on the right side the task context 82 performed by the framework server portion 59. The task context is free of race conditions.

The synchronization and decoupling of the different message links is performed in a synchronization module 84, which may be called, in an embodiment, job queue.

Further figure 6 shows that a first link message is received at a first port 64 and a second link message is received at a second port 66 substantially concurrently. Each port is adapted to generate an interrupt or a signal 86, 88. For example, an interrupt handler or interrupt service routine (isr), which may be called "recv_isr" in Figure 6, may be executed on reception of a link message. The synchronization module 84 is adapted to receive the signals 86, 88. The synchronization module 84 holds information about actions to be taken to handle the link message receptions. For example, the virtualization layer 28 is adapted to issue the interrupt 68, 88. The synchronization module 84 proceeds with incoming messages by storing the port identification in the message header and storing the message to a FIFO buffer or leave it implicitly queued at the port. According to an embodiment, implicitly queued means that the queuing mechanism of the port is not visible to the users of the link. In other words, the communication link, for example the IPC link is lossless.

For that purpose, the framework server portion 59 includes or provides at least one list, in particular a first list 90 shown in Figure 7 of jobs to be executed in a specific sequence. Further, the framework server portion 59 includes or provides a second list 92, which lists the available jobs. In other words, the second list 92 holds free objects or jobs and the first list 90 holds active objects or jobs. When a (link) message arrives, the synchronization module 84 takes one job from the second list 92, fills it with information, for example a job parameter, and appends it to the first list 90. The job may be removed from the second list 92.

If no link messages have been arrived all jobs are listed in the second list 92 and no job is listed in the first list 90.

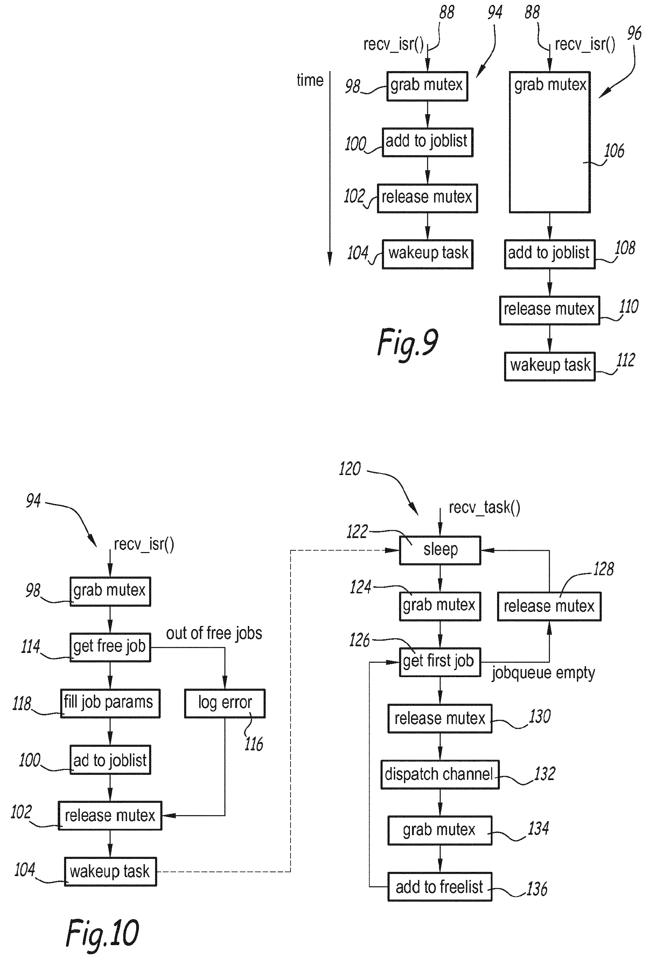

Figure 9 shows two flow charts of the actions performed by the framework server portion 59, in particular by the synchronization module 84, when two link messages arrive concurrently at two different ports 64, 66. On the left side of Figure 9, the flow chart or execution thread 94 upon a reception of a link message on the first port 64 is shown. The second flow chart or execution thread 96 shows the reception of a link message on the second port 66. The framework server portion 59, in particular the synchronization module 84, includes a locking module, for example a mutual exclusion module called also mutex or spinlock. The steps of each flow chart 94, 96 are showed in their chronological sequence. Further, it is shown which steps are concurrently executed, for example steps 104 and 108 are concurrently executed. It should be noted that in the interrupt context race condition may occur because two interrupts may be executed on two different processor cores on a multicore processor. Both flow charts 94 and 96 could be considered as an execution threat that are executed upon reception of a respective signal, in particular an interrupt signal, for example, they are started by a interrupt service routine or handler (recv_isr).

On reception of the first signal 86, the locking module toggled into a locked state (see step 98: "grap mutex"). For example in a locked state, a second step trying to switch the locking module in the locked state is blocked. The locking module is then adapted to remain in a locked state until it is released again. In step 100, the synchronization module framework server portion 59 removes the respective job from the second list 92, fills it with information and appends it to the first list 90. Then, in step 102, the locking module is released. After releasing the locking module, in step 104, a further sequence of steps is started for reading the link message from the first port 64, which is shown in Figure 10 in more detail, for example, using a wake up routine for waking up a task if necessary.

On reception of the second signal 88, in step 106, the synchronization module tries to switch the locking module into a locked state. The execution of step 106 is blocked until step or block 102 releases the locking module, after it has written the job into the first list 90.

Then, the locking module is toggled successful into the locked state in step 106, and the sequence of steps regarding the second signal is continued in block 108, where the synchronization module or framework server portion 59 the reads the respective job from the second list 92 and places it into the first list 90. Then, in step 110 the locking module is released and a further sequence of steps or execution thread 120 is started for reading the link message from the second port 66, for example using a wake up routine.

In other words, two simultaneously arriving interrupts are scheduled by the locking module, here the mutual exclusion module, to access the joblist internal data one by the other, so that the first and second lists are left in a consistent state.

Figure 10 shows more details of the flow chart 94 or execution thread upon reception of the first signal. After switching the locking module into the locked state, the synchronization module 84 is adapted to get a free job, see step 114, from the second list 92. If there is no available job in the second list 92, an error is generated in step 116 and the locking module is released in step 102. Then, the job parameters are provided into the job in step 118 before the job is added to the first list 90 in step 100. For example a job parameter is an identification or identifier of the port that issued the interrupt or interrupt signal.

Figure 10 further shows the execution thread 120 after having been waked up from a sleep state 122. The execution thread 120 is a single execution thread that handles further message processing. The execution thread 120 is adapted to process one after the other the jobs listed in the first list 90. In other embodiments, it is not necessary to wake up the execution thread 120 as it is running in a permanent loop.

For example, the execution thread 120 is waked up with a routine called recv_task, also shown in Figure 6.

In Step 124, the locking module is toggled into a locked state (see step 98: "grap mutex").

Then, in step 126, a job is retrieved from the first list 90. In case the first list is empty, in step 128, the locking module is released, and the execution thread 120 enters the sleep state in step 122. In an embodiment, the first list 90 is organized as a FIFO (first in, first out) or a queue.

If it is possible to read a job from the first list 90, the locking module is also released in step 130. Then, the content of the job is read, for example that a link message is arrived at the first port 64. Subsequently, in step 132 the framework server portion 59 reads the link message from the first port, if necessary de-multiplexes the different used channels, and provides the content of the channels to the sharing logic 36 as shown in Figure 6.

In some embodiments, in that step an assigned partition identification of a remote client, for example partitions 24 or 26, is assigned and a configured receive callback function assigned to the respective channel identification is called. According to embodiments, each channel has its own receive callback function. During initialization, each channel object registers itself with a receive callback function, in Figure 6 shown as recv_cb, for message reception. This function is implemented in the sharing logic 36.

In other words, the framework server portion 59 invoices the registered message handling function of the sharing logic 36.

Then, in step 134, the locking module is switched again into a locked state, and subsequently, in step 136, the job is again added to the second list 92 of available jobs. Then, again step 126 is performed, in particular to retrieve the next job from the first list.

Thus it is assured that the user of the framework, for example a shared device driver developer) can rely on the raceless property of the received messages handling function, which reduces the complexity of the code to write and systematically avoids difficult to track errors caused by race conditions.

According to the invention, race conditions are avoided, in particular by decoupling of (virtual) interrupt context and task context using a job queue together with a dispatcher task.

## Claims

1. System (20), comprising at least one processor (3), and at least one memory (5), and at least one hardware interface (7) adapted to be connected to at least one peripheral device (9), the system further comprising:
a virtualization layer (28) adapted to run on the at least one processor;
a plurality of partitions (22, 24, 26) adapted to run on the at least one virtualization layer, the virtualization layer being adapted to assign processor time and memory space to the plurality of partitions (22, 24, 26), the plurality of partitions (22, 24, 26) comprising a first partition (22) and a plurality of second partitions (24), wherein the first partition includes a device driver (34) having access to the at least one hardware interface (7) and a sharing logic (36) adapted to control and provide access for the plurality of second partitions (24) to the device driver (7), wherein each second partition (24, 26) includes a virtual device driver (38, 40) for the at least one hardware interface (7);
a plurality of inter partition communication link (30, 32) provided by the virtualization layer (28) for connecting the first partition (22) to each second partition (24, 26); and
a sharing infrastructure (58) providing a connection between the sharing logic (36) and the virtual device drivers (38, 40) via the inter partition communication links, wherein the sharing infrastructure comprises a framework (56) for managing the connection on the inter partition communication links (30, 32), wherein the framework (56) includes a framework server portion (59), a first framework client portion (60) provided in the first second partition (24) and the second framework client portion (62) provided in the second second partition (26), wherein each framework client portion (60, 62) is connected to the framework server portion (59) via the at least one inter partition communication link (30, 32), wherein framework server portion (59) is adapted to synchronize received link messages from the first and second framework client portion (60, 62).

2. System according to claim 1, wherein the interfaces and/or commands provided by the sharing infrastructure (58) is independent from the device driver (34), the at least one hardware interface (7), the peripheral device and/or the virtual device driver (38, 40) wherein, in particular, the sharing infrastructure (58) comprises a server application program interface (50) for the sharing logic (36), a client application program interface (52, 54) for each virtual device driver (38, 40), and a framework (56) for managing the connection on the inter partition communication links (30, 32) between the client application program interface (52, 54) and the server application program interface (50).

3. System according to any one of the preceding claims, wherein, at the framework server portion (59), a respective port (64, 66) is assigned to each inter partition communication link (30, 32), wherein the framework server portion (59) is adapted to read only a single message at a time from the plurality of ports.

4. System according to any one of the preceding claims, wherein the framework server portion (59) is adapted to provide a first list, wherein the first list lists jobs to be performed, wherein the framework server portion (59) is adapted to write only a single job at a time into the list upon reception of a plurality of link messages at the ports (64, 66), wherein one or more jobs include at least an information that a message was received at a specific port, wherein framework server portion (59) is adapted to process the jobs in the first list according to their order, in particular to read the received link message from the respective port.

5. System according to claim 4, wherein after being read, the framework server portion (59) is adapted to remove the respective job from the first list.

6. System according to claim 4 or 5, wherein upon reception of a link messages at a ports (64, 66), a signal is generated, for example an interrupt signal assigned to one or more ports, wherein the framework server portion (59) is adapted to, upon reception of the signal to write the respective job into the first list.

7. System according to one of the claims 4 to 6, wherein the framework server portion (59) is adapted to provide a second lists including available jobs, wherein the number and/or type of possible jobs is/are predefined.

8. System according to any one of the preceding claims, wherein each inter partition communication link (30, 32) is adapted to transport one or more channels (72, 74, 76) to exchange one or more channel messages between the framework server portion (59) and the respective framework client portions (60, 62).

9. System according to claim 8, wherein, in case of that a plurality of channels (72, 74, 76) are provided on one inter partition communication link (30, 32), the plurality of channels are multiplexed.

10. System according to claim 9 or 10, wherein the framework server portion (59) is adapted to demultiplex the channels from the communication link, in particular to read the channel messages from the link messages.

11. System according to any one of claims 8 to 11, wherein the framework server portion (59) is adapted to communicate via the same channel (72) with at least two framework client portions (60, 62) provided on different partitions.

12. System according to one of the preceding claims, wherein the sharing logic (36) is adapted to synchronize the access to the at least one hardware interface (7), to provide access to the at least one hardware interface (7) in dependence of a priority of a partition and/or a data, to provide exclusive access to at least one specific peripheral device (9) for an application on a predefined second partition, to map physical addresses to respective second partitions and/or to provide access control to a memory or a storage device.

13. Method for operating a system (20) in a control unit (1) comprising at least one processor, and at least one memory, and at least one hardware interface (7) adapted to be connected to at least one peripheral device (9), the method comprising:
running a virtualization layer (28) on the at least one processor,
running a plurality of partitions (22, 24, 26) on the at least one virtualization layer (28), the virtualization layer assigning processor time and memory space to the plurality of partitions (22, 24, 26), the plurality of partitions (22, 24, 26) comprising a first partition (22) and a plurality of second partitions (24), wherein the first partition includes a device driver (34) having access to the at least one hardware interface (7) and a sharing logic (36), and each second partitions includes a virtual device driver (38, 40) for the at least one hardware interface (7),
controlling and providing access, by the sharing logic (36), to the device driver (7) for the plurality of second partitions (24);
connecting, by the virtualization layer (28), the first partition (22) to each second partition (24, 26) via a plurality of inter partition communication links (30, 32);
connecting, via the inter partition communication links, between the sharing logic (36) and the virtual device drivers (38, 40);
managing, by a framework (56), the connection on the inter partition communication links (30, 32), wherein the framework (56) includes a framework server portion (59), a first framework client portion (60) provided in the first second partition (24) and the second framework client portion (62) provided in the second second partition (26), wherein each framework client portion (60, 62) is connected to the framework server portion (59) via the at least one inter partition communication link (30, 32); and
synchronizing received link messages from the first and second framework client portion (60, 62) by the framework server portion (59).

14. A computer program product comprising commands for implementing the method according to claim 13, when loaded and executed on a processor.

15. Non-volatile memory including a program containing commands for implementing the method according to claim 13, when loaded and executed on a processor.
